# EUROPÄISCHE PATENTSCHRIFT

(11) **EP 2 435 237 B1**
(45) Veröffentlichungstag und Bekanntmachung des Hinweises auf die Patenterteilung: **19.08.2015**
(21) Anmeldenummer: 10720604.7
(22) Anmeldetag: 19.05.2010
(51) Int. Cl.: B29C 70/24, B29C 70/88, B29D 24/00, B64C 1/00

(54) **STRUKTURBAUTEIL UND HERSTELLUNGSVERFAHREN FÜR EIN STRUKTURBAUTEIL**
STRUCTURAL COMPONENT AND PRODUCTION METHOD FOR A STRUCTURAL COMPONENT
COMPOSANT DE STRUCTURE ET PROCÉDÉ DE FABRICATION POUR UN COMPOSANT DE STRUCTURE

(30) Priorität: 25.05.2009 DE 102009026458; 26.05.2009 US 181045 P
(43) Veröffentlichungstag der Anmeldung: 04.04.2012
(73) Patentinhaber: Airbus Operations GmbH, 21129 Hamburg (DE)
(72) Erfinder: WEBER, Hans-Juergen, 27283 Verden (DE); ENDRES, Gregor, Christian, 85276 Pfaffenhofen (DE)
(74) Vertreter: Isarpatent
(86) Internationale Anmeldenummer: PCT/EP2010/056860
(87) Internationale Veröffentlichungsnummer: WO 2010/136362

(56) Entgegenhaltungen:
- EP-A2- 1 816 070
- DE-A1- 1 951 310
- DE-A1- 10 018 035
- DE-A1-102005 024 408
- DE-B3-102007 003 274
- US-B1- 6 291 049

## Beschreibung

Die vorliegende Erfindung betrifft ein Strukturbauteil für ein Luft- oder Raumfahrzeug sowie ein Herstellungsverfahren für ein derartiges Strukturbauteil. Ferner betrifft die Erfindung ein Luft- oder Raumfahrzeug mit einem derartigen Strukturbauteil.

Obwohl auf beliebige Strukturbauteile anwendbar, werden die vorliegende Erfindung sowie die ihr zugrunde liegende Problematik in Bezug auf Rumpfschalen von Verkehrsflugzeugen näher erläutert.

Die EP1134069 offenbart, Strukturbauteile für ein Flugzeug in einer doppelschaligen Bauweise aus Kernverbundbauteilen herzustellen, die einen Schaumstoffkern aufweisen. Derartige Strukturbauteile, insbesondere wenn sie mit faserverstärkten Kunststoffen gefertigt werden, bieten einen großen Gewichtsvorteil gegenüber Strukturbauteilen aus herkömmlichen Werkstoffen wie z.B. Aluminium. Allerdings ist die Herstellung und Handhabung derartiger Strukturbauteile in doppelschaligen Bauweise bei einer Montage zu größeren Strukturen z.B. eines Luft- oder Raumfahrzeugs äußerst zeit- und kostenintensiv. Zudem sind bei der Montage auftretende Beschädigungen aufwändig zu reparieren.

Die Druckschrift DE 102007003274 B3 beschreibt ein Strukturbauteil mit einem zwischen Decklagen eingeschlossenen Schaumstoffkern und einer Vielzahl von über die Bauteilfläche verteilten Streben, die die Decklagen durch den Bauteilkern miteinander verbinden. Ein lokaler Bearbeitungsbereich ist durch ein senkrecht zu den Decklagen durch den Schaumwerkstoff verlaufendes Faserflächenmaterial zylindermantelartig umgrenzt, wobei eine der Streben das Faserflächenmaterial mit einer Decklage verbindet.

Es ist eine Aufgabe der vorliegenden Erfindung, die zuverlässige und kostengünstige Anwendung doppelschaliger Strukturbauteile zu ermöglichen.

Erfindungsgemäß wird diese Aufgabe durch ein Strukturbauteil mit den Merkmalen des Patentanspruchs 1 oder durch ein Herstellungsverfahren mit den Merkmalen des Patentanspruchs 12 gelöst.

Die der vorliegenden Erfindung zugrunde liegende Idee besteht darin, ein flächenhaft über eine Bauteilfläche ausgedehntes Strukturbauteil mit zwei durch einen dazwischen eingeschlossenen Kern verbundenen Decklagen dadurch zu versteifen, dass zwischen den Decklagen ein Versteifungsgürtel vorgesehen wird, der sich entlang einer wesentlich parallel zur Bauteilfläche verlaufenden Versteifungsstrecke zwischen den Decklagen erstreckt. Da der Versteifungsgürtel wie der Kern im Innern zwischen den Decklagen verläuft, kann er mit in die Fertigung des Kernverbunds verwendeten Verfahren ausgebildet werden, was gegenüber einer Montage mit herkömmlichen Versteifungselementen wie Stringern oder Spanten große Kostenvorteile bietet. Da der Versteifungsgürtel innerhalb der Decklagen verläuft, ist er zudem zwischen den Decklagen vor Beschädigungen geschützt.

Gemäß einer bevorzugten Weiterbildung weist der Bauteilkern einen Schaumwerkstoff auf. Dies ermöglicht, das Strukturbauteil kostengünstig herzustellen, indem die Streben im Schaumwerkstoff als provisorisch stützendes Hilfsmaterial ausgebildet und mit den Decklagen verbunden werden, wobei der Schaumwerkstoff aufgrund seiner Leichtigkeit kostensparend einfach im Bauteilkern verbleiben kann. Alternativ kann der Schaumstoff entfernt sein, um noch geringeres Gewicht zu erreichen.

Gemäß einer bevorzugten Weiterbildung weisen die Streben jeweils ein harzinfiltriertes Faserbündel auf. Dies ermöglicht, das Strukturbauteil kostengünstig herzustellen, indem die Streben z.B. mit einem einfachen Nähverfahren im Schaumwerkstoff ausgebildet und in den dabei entstandenen Durchgangslöchern mit Harz infiltriert werden.

Erfindungsgemäß ist der Versteifungsgürtel durch eine sich über die Versteifungsstrecke erstreckende Einlage in den Bauteilkern gebildet. Auf diese Weise ist eine hohe Stabilität erreichbar; weiterhin wird ermöglicht, entlang der Einlage aneinanderstoßende Decklagen stabil miteinander zu verbinden. Erfindungsgemäß weist die Einlage ein schlauchförmiges Fasergeflecht auf, das einen Einlagekern umgibt, weil diese Struktur bei geringem Eigengewicht besonders stabil ist.

Gemäß einer bevorzugten Weiterbildung durchdringt mindestens eine Strebe sowohl den Bauteilkern als auch den Einlagekern. So wird die Einlage besonders fest eingebunden. Vorzugsweise verläuft die Strebe diagonal zur Bauteilfläche, da sie so einfach von außen einzubringen ist.

Gemäß einer bevorzugten Weiterbildung weist die Bauteilfläche eine Krümmung in zumindest einer Raumrichtung auf, wobei der Versteifungsgürtel schraubenartig diagonal zur Richtung der Krümmung verläuft. Damit kann das Bauteil vorteilhaft gegen Torsionsschwingungen entlang der Krümmungsachse versteift werden.

Gemäß einer bevorzugten Weiterbildung sind ein erster und ein zweiter Versteifungsgürtel vorgesehen, die einander unter einem Winkel kreuzend verlaufen. Damit kann das Bauteil vorteilhaft gegen Verformung bei Belastungen in unterschiedlichen Richtungen versteift werden.

Gemäß einer bevorzugten Weiterbildung verläuft der Versteifungsgürtel in einem ersten und einem dritten Abschnitt wesentlich in einer übereinstimmenden Richtung und weist in einem zwischen dem ersten und dritten Abschnitt angeordneten Abschnitt eine Aufspaltung in zwei ringförmig verbundene Zweige auf. Auf diese Weise kann der Versteifungsgürtel ohne wesentliche Stabilitätseinbußen um flächige Ausschnitte - z.B. Fensterausschnitte - im Strukturbauteil geführt werden.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine Schnittansicht eines beispielhaften Strukturbauteils;
- Fig. 2: eine Seitenansicht einer Rumpftonnensektion eines Flugzeugs mit einem beispielhaften Strukturbauteil;
- Fig. 3: eine schematische Schnittansicht eines beispielhaften Strukturbauteils mit einer Einlage;
- Fig. 4: eine Darstellung eines beispielhaften Herstellungsverfahrens für das Strukturbauteil aus Fig. 3;
- Fig. 5: eine schematische Schnittansicht eines Strukturbauteils mit einer Einlage, gemäß einer Ausführungsform;
- Fig. 6: eine schematische Schnittansicht eines beispielhaften Strukturbauteils mit einer Fensteröffnung; und
- Fig. 7: eine schematische Schnittansicht eines beispielhaften Strukturbauteils mit einer Türöffnung.

In den Figuren bezeichnen dieselben Bezugszeichen gleiche oder funktionsgleiche Komponenten, soweit nichts Gegenteiliges angegeben ist.

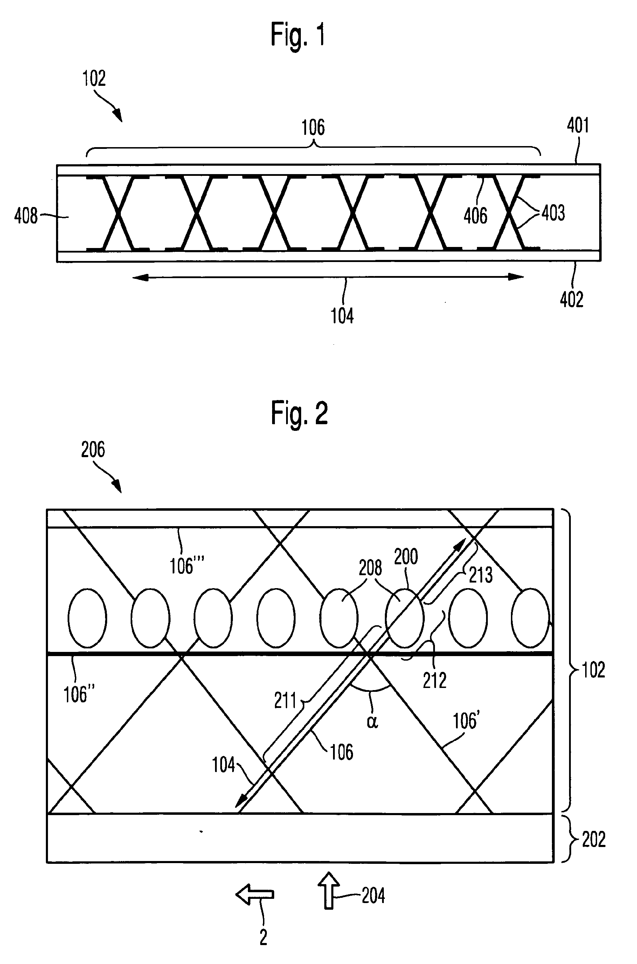

Figur 1 zeigt eine Schnittansicht eines Strukturbauteils 102 mit einem flächenhaft über eine Bauteilfläche des Verbundbauteils ausgedehnten Bauteilkern 408 aus einem Schaumwerkstoff, an dessen gegenüberliegenden, wesentlich parallel verlaufenden Seiten eine erste 401 und zweite 402 Deckschicht aus einem Fasermaterial ausgebildet sind. Die Bauteilfläche verläuft parallel zu den Deckschichten 401, 402 und steht senkrecht zur Zeichenebene von Fig. 1. Zwischen der ersten 401 und zweiten 402 Deckschicht erstrecken sich Streben 403 aus Faserbündeln durch den Bauteilkern 408, deren Enden 406 an den Deckschichten 401, 402 anliegen. Deckschichten 401, 402 und Streben 403 sind mit einer gemeinsamen Kunststoffmatrix verfüllt.

Die Streben 403 sind über die gesamte Bauteilfläche des Strukturbauteils 102 mit einer wesentlich konstanten Mindestflächendichte verteilt. Zusätzlich ist entlang einer langgestreckten Zone eines Versteifungsgürtels 106, der sich entlang einer wesentlich parallel zur Bauteilfläche verlaufenden Versteifungsstrecke 104 zwischen den Decklagen erstreckt, die Flächendichte der Streben 403 über die Mindestflächendichte hinaus erhöht. Damit weist das Strukturbauteil 102 im Bereich des Versteifungsgürtels 106 eine erhöhte Steifigkeit auf.

Figur 2 zeigt eine Seitenansicht einer Rumpftonnensektion 206 eines Flugzeugs. Die Rumpftonnengeometrie ist in Längsrichtung geteilt, wobei die obere Rumpftonnenhälfte von einem ein Strukturbauteil 102 mit einem doppelschaligen Aufbau wie in Fig. 1 dargestellt gebildet ist. Dieses Strukturbauteil 102 ist in einem Stück gefertigt, z.B. mit Hilfe eines Formwerkzeugs mit einer inneren Formfläche, um die Außentoleranzen zu garantieren. Die untere Rumpftonnenhälfte 202 kann z.B. in ähnlicher Weise, aus Metall oder einem anderen Werkstoff gefertigt sein.

Im Strukturbauteil 102 verlaufen durch erhöhte Flächendichte von Streben 403 gebildete Verstärkungsgürtel 106, 106', 106'', 106''' sowohl in Flugzeuglängsrichtung 203 als auch in Richtungen, die sowohl zur Flugzeuglängsrichtung als auch zur Krümmungsrichtung 204 des wesentlich zylinderartig gekrümmten Strukturbauteils 102 geneigt verlaufen und sich schraubenartig diagonal um die Rumpftonnensektion 206 winden. Die diagonal verlaufenden Verstärkungsgürtel 106, 106' schneiden sich dabei in einem Winkel α von ca. 90°.

In der Rumpftonnensektion 206 ist eine Reihe Fensteröffnungen 208 ausgebildet, die von ringförmigen Verstärkungen 200 umgeben sind. Die ringförmigen Verstärkungen 200 sind in den Verlauf der Verstärkungsgürtel 106, 106', 106'', 106''' einbezogen, indem z.B. ein erster Abschnitt 211 des Verstärkungsgürtels 106 in Richtung der diagonalen Verstärkungsstrecke 104 verläuft, bis er auf eine ringförmige Verstärkung 200 um eine Fensteröffnung 208 stößt. In einem zweiten Abschnitt 212 im Bereich der Fensteröffnung übernimmt die ringförmige Verstärkung 200 die Funktion des Verstärkungsgürtels, der sich hier in zwei ringförmig zusammenhängende Zweige verzweigt. An der gegenüberliegenden Seite der ringförmigen Verstärkung 200 vereinigen sich diese Zweige, und der Verlauf des Verstärkungsgürtels setzt sich in einem dritten Abschnitt 213 in Richtung der Verstärkungsstrecke 104 fort.

Das gezeigte Verstärkungsmuster ist rein beispielhaft und kann vollständig an lokale Belastungen (Lasteinleitungen, Ausschnitte) angepasst werden. Geometrische Variationen im Schaumstoff (Dickensprünge, Krümmungen, Rampen) können ferner in das Verstärkungsmuster mit einbezogen sein.

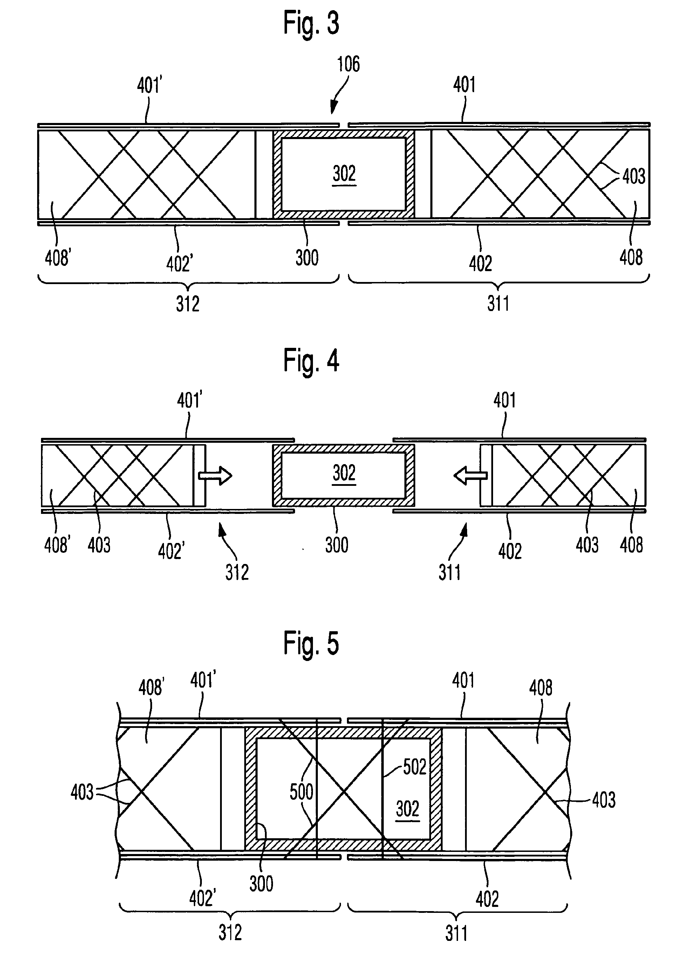

Figur 3 zeigt eine schematische Schnittansicht eines weiteren Strukturbauteils 102, das aus einer erste Bauteilhälfte 311 mit Schaumstoffkern 408 und Decklagen 401, 402 sowie eine zweite Bauteilhälfte 312 mit Schaumstoffkern 408' und Decklagen 401, 402 entlang einer im Zentrum von Fig. 3 senkrecht zur Zeichenebene verlaufenden Fügelinie zusammengefügt ist. Entlang der Fügelinie ist zwischen den Decklagen 401, 401' und 402, 402' eine Einlage mit einem Einlagekern 302 aus Schaumwerkstoff und einer Ummantelung 300 aus schlauchförmigen Fasergeflecht eingebracht. Die Ummantelung 300 ist z.B. gemeinsam mit den Decklagen 401, 401', 402, 402' und den Streben 403 mit Harz infiltriert. Durch die Ummantelung wirkt die Einlage als Versteifungsgürtel 106.

Figur 4 stellt schematisch ein mögliches Herstellungsverfahren für das Strukturbauteil aus Fig. 3 dar, bei dem an beiden Bauteilhälften 311, 312 ein Teil des jeweiligen Kerns 408, 408' entfernt und anstelle dessen die Einlage eingeschoben wird. Durch zusätzlich einzubringende Streben 500, 502, die sowohl die Decklagen 401, 401', 402, 402' als auch die Ummantelung 300 der Einlage durchdringen, kann, wie in Figur 5 gezeigt, die Einbindung der Einlage weiter verstärkt sein.

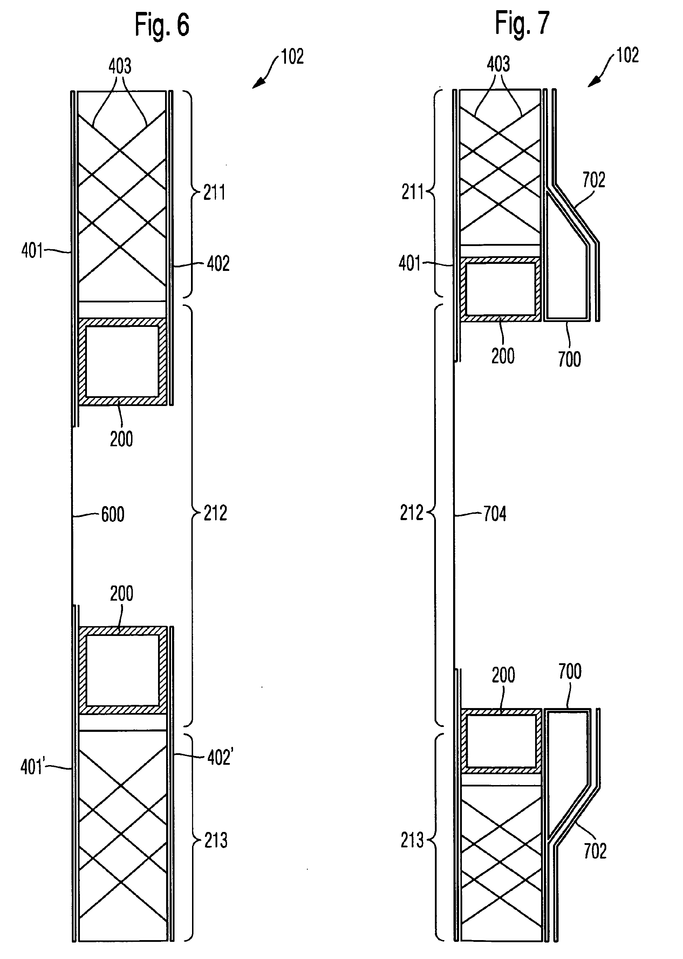

Figur 6 zeigt eine schematische Schnittansicht eines Strukturbauteils 102 mit einer Öffnung eines Fensters 600, bei dem ein aus drei Abschnitten 211, 212, 213 wie zu Fig. 2 beschrieben bestehender Verstärkungsgürtel über die Fensteröffnung hinweg verläuft. Die ringförmige Einlage 200 ist z.B. wie die Einlage in Fig. 3 aufgebaut. Fig. 7 zeigt eine schematische Schnittansicht eines Strukturbauteils 102 mit einer Öffnung einer Tür 704. Als zusätzliche Verstärkung sind Auflagen 700 und eine weitere Deckschicht 702 an der Innenseite des Flugzeugrumpfs angebracht.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können weitere Strukturbauteile eines Flugzeugs wie z.B. Tragflächen oder Leitwerke auf die beschriebene Weise aufgebaut sein.

### Bezugszeichenliste

- 102: Strukturbauteil
- 104: Versteifungsstrecke
- 106: Versteifungsgürtel
- 200: Ringstruktur
- 202: Unterschale
- 203: Flugzeuglängsrichtung
- 204: Krümmungsrichtung
- 206: Rumpftonnensektion
- 211-213: Gürtelabschnitte
- 300: Schlauchgeflecht
- 302: Einlagekern
- 311, 312: Bauteilhälften
- 401, 402: Deckschicht
- 403: Strebe
- 406: Verankerung
- 408: Bauteilkern
- 500, 502: Zusätzliche Streben
- 600: Fenster
- 500: Vertikale Strebe
- 502: Diagonale Strebe
- 700: Auflage
- 702: weitere Deckschicht
- 704: Tür

## Patentansprüche

1. Strukturbauteil (102) für ein Luft- oder Raumfahrzeug, mit:
einem über eine Bauteilfläche ausgedehnten Bauteilkern (408);
einer ersten (401) und zweiten (402) Decklage, welche sich über die Bauteilfläche erstreckend an zwei einander gegenüberliegenden Grenzflächen des Bauteilkerns (408) ausgebildet sind; und
einer Vielzahl von über die Bauteilfläche verteilten Streben (403, 500, 502), welche die erste (401) und zweite (402) Decklage durch den Bauteilkern (408) miteinander verbinden, wobei mindestens eine der Streben (500, 502) sowohl mindestens eine Decklage (401, 402) als auch das schlauchförmige Fasergeflecht (300) durchdringt,
**dadurch gekennzeichnet, dass** ein Versteifungsgürtel (106), welcher durch eine sich entlang einer wesentlich parallel zur Bauteilfläche verlaufenden Versteifungsstrecke (104) zwischen den Decklagen (401, 402) erstreckende, einen Einlagekern (302) und ein den Einlagekern (302) umgebendes schlauchförmiges Fasergeflecht (300) aufweisende Einlage in den Bauteilkern (408) gebildet ist.

2. Strukturbauteil (102) nach Anspruch 1,
**dadurch gekennzeichnet,**
**dass** der Bauteilkern (408) und/oder der Einlagekern (302) einen Schaumwerkstoff aufweist.

3. Strukturbauteil (102) nach Anspruch 1 oder 2,
**dadurch gekennzeichnet,**
**dass** die Streben (403) jeweils ein harzinfiltriertes Faserbündel aufweisen.

4. Strukturbauteil (102) nach wenigstens einem der vorhergehenden Ansprüche,
**dadurch gekennzeichnet,**
**dass** die mindestens eine Strebe (500, 502) die Einlage durchdringt.

5. Strukturbauteil (102) nach Anspruch 4,
**dadurch gekennzeichnet,**
**dass** die mindestens eine Strebe (500, 502) diagonal zur Bauteilfläche verläuft.

6. Strukturbauteil (102) nach wenigstens einem der vorhergehenden Ansprüche,
**dadurch gekennzeichnet,**
**dass** die Decklagen (401, 402), das schlauchförmige Fasergeflecht (300) und die Streben (403, 500, 502) gemeinsam mit Harz infiltriert sind.

7. Strukturbauteil (102) nach wenigstens einem der vorhergehenden Ansprüche,
**dadurch gekennzeichnet,**
**dass** die Bauteilfläche eine Krümmung in zumindest einer Krümmungsrichtung (204) aufweist, wobei der Versteifungsgürtel (106) schraubenartig diagonal zur Krümmungsrichtung (204) verläuft.

8. Strukturbauteil (102) nach wenigstens einem der vorhergehenden Ansprüche,
**gekennzeichnet durch**
einen ersten (106) und einen zweiten (106') Versteifungsgürtel, welche einander unter einem Winkel (α) kreuzend verlaufen.

9. Strukturbauteil (102) nach wenigstens einem der vorhergehenden Ansprüche,
**dadurch gekennzeichnet,**
**dass** der Versteifungsgürtel (106) in einem ersten (211) und einem dritten (213) Abschnitt wesentlich in Richtung der Versteifungsstrecke (104) verläuft, und in einem zwischen dem ersten (211) und dritten (213) Abschnitt angeordneten zweiten Abschnitt (212) eine Aufspaltung (200) in zwei ringförmig verbundene Zweige aufweist.

10. Rumpfschale (206) für ein Luft- oder Raumfahrzeug mit einem Strukturbauteil nach einem der Ansprüche 1 bis 9.

11. Luft- oder Raumfahrzeug mit einer Rumpfschale (206) nach Anspruch 10 oder einem Strukturbauteil (102) nach einem der Ansprüche 1 bis 9.

12. Verfahren zur Herstellung eines Strukturbauteils (102) für ein Luft- oder Raumfahrzeug, mit folgenden Schritten:
Bereitstellen eines über eine Bauteilfläche ausgedehnten Bauteilkerns (408), welcher einen Schaumwerkstoff aufweist;
Anordnen einer ersten (401) und zweiten (402) Decklage, welche sich über die Bauteilfläche erstrecken, an zwei einander gegenüberliegenden Grenzflächen des Bauteilkerns (408);
Einbringen eines Versteifungsgürtel (106), welcher durch eine sich entlang einer wesentlich parallel zur Bauteilfläche verlaufenden Versteifungsstrecke (104) zwischen den Decklagen (401, 402) erstreckende, einen Einlagekern (302) und ein den Einlagekern (302) umgebendes schlauchförmiges Fasergeflecht (300) aufweisende Einlage in den Bauteilkern (408) gebildet ist; und
Ausbilden einer Vielzahl von über die Bauteilfläche verteilten Streben (403, 500, 502), welche die erste (401) und zweite (402) Decklage durch den Bauteilkern (408) miteinander verbinden, sodass mindestens eine der Streben (500, 502) sowohl mindestens eine Decklage (401, 402) als auch das schlauchförmige Fasergeflecht (300) durchdringt.

13. Verfahren nach Anspruch 12,
**gekennzeichnet durch**
gemeinsames Infiltrieren der Decklagen (401, 402), des schlauchförmigen Fasergeflechts (300) und der Streben (403, 500, 502) mit Harz.

14. Verfahren nach Anspruch 12 oder 13,
**gekennzeichnet durch**
einen Schritt des zumindest teilweisen Entfernens des Schaumwerkstoffs.

## Claims

1. Structural component (102) for an aircraft or spacecraft, comprising:
- a component core (408) stretched over a component surface;
- a first (401) and second (402) cover layer which are formed extending over the component surface on two mutually opposing boundary faces of the component core (408); and
- a plurality of struts (403, 500, 502), which are distributed over the component surface and which interconnect the first (401) and second (402) cover layer through the component core (408), at least one of the struts (500, 502) penetrating both through at least one cover layer (401, 402) and through the hose-like fibre meshwork (300),
**characterised by** a stiffening belt (106), which is formed by an inlay into the component core (408), said inlay extending along a reinforcing path (104) between the cover layers (401, 402), which extends substantially parallel to the component surface, and comprising an inlay core (302) and a hose-like fibre meshwork (300) surrounding the inlay core (302).

2. Structural component (102) according to claim 1, **characterised in that** the component core (408) and/or the inlay core (302) comprises a foam material.

3. Structural component (102) according to either claim 1 or claim 2, **characterised in that** the struts (403) each comprise a resin-infiltrating fibre bundle.

4. Structural component (102) according to at least one of the preceding claims, **characterised in that** the at least one strut (500, 502) penetrates through the inlay.

5. Structural component (102) according to claim 4, **characterised in that** the at least one strut (500, 502) extends diagonally with respect to the component surface.

6. Structural component (102) according to at least one of the preceding claims, **characterised in that** the cover layers (401, 402), the hose-like fibre meshwork (300) and the struts (403, 500, 502) are jointly infiltrated with resin.

7. Structural component (102) according to at least one of the preceding claims, **characterised in that** the component surface has a curvature in at least one curvature direction (204), the stiffening belt (106) extending diagonally with respect to the curvature direction (204) in the manner of a screw.

8. Structural component (102) according to at least one of the preceding claims, **characterised by** a first (106) and a second (106') stiffening belt which extend crossing one another at an angle (α).

9. Structural component (102) according to at least one of the preceding claims, **characterised in that** the stiffening belt (106) extends substantially in the direction of the stiffening path (104) in a first (211) and a third (213) portion, and has a split (200), into two branches connected in a ring shape, in a second portion (212) arranged between the first (211) and third (213) portions.

10. Fuselage shell (206) for an aircraft or spacecraft comprising a structural component according to any of claims 1 to 9.

11. Aircraft or spacecraft comprising a fuselage shell (206) according to claim 10 or a structural component (102) according to any of claims 1 to 9.

12. Method for producing a structural component (102) for an aircraft or spacecraft, comprising the following steps:
- providing a component core (408) stretched over a component surface and comprising a foam material;
- arranging a first (401) and second (402) cover layer, which are formed extending over the component surface, on two mutually opposing boundary faces of the component core (408);
- introducing a stiffening belt (106), which is formed by an inlay into the component core (408), said inlay extending along a reinforcing path (104) between the cover layers (401, 402), which extends substantially parallel to the component surface, and comprising an inlay core (302) and a hose-like fibre meshwork (300) surrounding the inlay core (302); and
- forming a plurality of struts (403, 500, 502), which are distributed over the component surface and which interconnect the first (401) and second (402) cover layer through the component core (408), at least one of the struts (500, 502) penetrating both through at least one cover layer (401, 402) and through the hose-like fibre meshwork (300),

13. Method according to claim 12, **characterised by** joint infiltration of the cover layers (401, 402), the hose-like fibre meshwork (300) and the struts (403, 500, 502) with resin.

14. Method according to either claim 12 or claim 13, **characterised by** a step of removing the foam material at least in part.

## Revendications

1. Composant de structure (102) d'un aéronef ou d'un véhicule spatial, comportant :
- une partie centrale (408) s'étendant sur une surface du composant ;
- une première (401) et une seconde (402) couche de couverture, s'étendant sur la surface du composant et réalisées sur deux surfaces limites opposées l'une à l'autre de la partie centrale (408) ; et
- une pluralité d'entretoises (403, 500, 502) qui sont réparties sur la surface du composant et qui relient entre elles la première (401) et la seconde (402) couche de couverture au travers de la partie centrale (408), au moins une des entretoises (500, 502) traversant autant au moins une couche de couverture (401, 402) que l'entrelacement de fibres (300) de forme tubulaire,
**caractérisé par le fait qu'**une ceinture de renfort (106) qui est formée dans la partie centrale (408) par un insert, qui s'étend entre les couches de couverture (401, 402) le long d'un tracé de renfort (104) qui passe essentiellement parallèlement à la surface du composant, et qui présente un tracé de renfort (302) et un entrelacement de fibres (300) de forme tubulaire qui entoure le noyau d'insertion (302).

2. Composant de structure (102) selon la revendication 1, **caractérisé par le fait que** la partie centrale (408) et/ou le noyau d'insertion (302) présente un matériau en mousse.

3. Composant de structure (102) selon la revendication 1 ou 2, **caractérisé par le fait que** les entretoises (403) présentent respectivement un faisceau de fibres infiltré par une résine.

4. Composant de structure (102) selon au moins l'une des revendications précédentes, **caractérisé par le fait que** l'au moins une entretoise (500, 502) traverse l'insert.

5. Composant de structure (102) selon la revendication 4, **caractérisé par le fait que** l'au moins une entretoise (500, 502) s'étend diagonalement à la surface du composant.

6. Composant de structure (102) selon au moins l'une des revendications précédentes, **caractérisé par le fait que** les couches de couverture (401, 402), l'entrelacement de fibres (300) de forme tubulaire et les entretoises (403, 500, 502) sont infiltrés conjointement par une résine.

7. Composant de structure (102) selon au moins l'une des revendications précédentes, **caractérisé par le fait que** la surface du composant présente une courbure dans au moins une direction de courbure (204), la ceinture de renfort (106) s'étendant à la manière d'une hélice diagonalement à la direction de courbure (204).

8. Composant de structure (102) selon au moins l'une des revendications précédentes, **caractérisé par** une première (106) et une seconde (106') ceinture de renfort, qui s'étendent en se croisant en formant un angle (α).

9. Composant de structure (102) selon au moins l'une des revendications précédentes, **caractérisé par le fait que** la ceinture de renfort (106) s'étend dans une première (211) et une troisième (213) section essentiellement dans la direction du tracé de renfort (104), et présente une division (200) en deux branches reliées de manière annulaire dans une seconde section (212) disposée entre la première (211) et la troisième section (213).

10. Coque de fuselage (206) d'un aéronef ou d'un véhicule spatial comportant un composant de structure selon l'une des revendications 1 à 9.

11. Avion ou engin spatial comportant une structure de fuselage (206) selon la revendication 10 ou un composant de structure (102) selon l'une des revendications 1 à 9.

12. Procédé de fabrication d'un composant de structure (102) d'un aéronef ou d'un véhicule spatial, comportant les étapes suivantes :
- fourniture d'un partie centrale (408) s'étendant sur une surface du composant, qui présente un matériau en mousse ;
- disposition d'une première (401) et d'une seconde (402) couche de couverture, qui s'étendent sur la surface du composant, au niveau de deux surfaces limites opposées l'une à l'autre de la partie centrale (408) ;
- insertion d'une ceinture de renfort (106), qui est formée dans la partie centrale (408) par un insert, qui s'étend entre les couches de couverture (401, 402) le long d'un tracé de renfort (104) qui passe essentiellement parallèlement à la surface du composant, et qui présente un tracé de renfort (302) et un entrelacement de fibres (300) de forme tubulaire qui entoure le noyau d'insertion (302) ; et
- réalisation d'une pluralité d'entretoises (403, 500, 502) réparties sur la surface du composant, qui relient entre elles la première (401) et la seconde (402) couche de couverture au travers de la partie centrale (408), de telle sorte qu'au moins une des entretoises (500, 502) traverse autant au moins une couche de couverture (401, 402) que l'entrelacement de fibres (300) de forme tubulaire.

13. Procédé selon la revendication 12, **caractérisé par** l'infiltration conjointe des couches de couverture (401, 402), de l'entrelacement de fibres (300) de forme tubulaire et des entretoises (403, 500, 502) par une résine.

14. Procédé selon la revendication 12 ou 13, **caractérisé par** une étape consistant à éliminer au moins partiellement le matériau en mousse.
